# EUROPÄISCHE PATENTSCHRIFT

(11) **EP 0 646 824 B1**
(45) Veröffentlichungstag und Bekanntmachung des Hinweises auf die Patenterteilung: **23.04.1997**
(21) Anmeldenummer: 93115670.7
(22) Anmeldetag: 29.09.1993
(51) Int. Cl.: G02C 5/00, G02C 1/06

(54) **Brillenrahmen**
Spectacle rim
Cercle de lunettes

(43) Veröffentlichungstag der Anmeldung: 05.04.1995
(73) Patentinhaber: Huang, Chien-Hsing, Tainan, Taiwan R.O.C. (TW)
(72) Erfinder: Huang, Chien-Hsing, Tainan, Taiwan R.O.C. (TW)
(74) Vertreter: Fritz, Edmund Lothar, Dipl.-Chem.

(56) Entgegenhaltungen:
- EP-A- 0 083 918
- DE-A- 2 043 587
- FR-A- 1 266 547
- FR-A- 1 354 222
- FR-A- 2 086 798
- US-A- 1 425 919

## Beschreibung

Die vorliegende Erfindung betrifft einen einfach aufgebauten Brillenrahmen für die Einfassung von Brillengläsern. Die Herstellung dieses Brillenrahmens erfolgt ausgehend von einem einstückigen Metall- oder Kunststoffstreifen, der gezogen werden kann und dessen beide Enden miteinander verbunden werden. Dieser Metall- oder Kunststoffstreifen für die Herstellung des Rahmens ist so gestaltet, daß er bei der Herstellung des Brillenrahmens und dessen Montage in eine gewünschte Umrißform gebogen werden kann und die Brillengläser sicher einfaßt.

Herkömmliche Rahmen für die Einfassung von Brillengläsern sind im allgemeinen starr und weisen einen im wesentlichen rechteckigen oder quadratischen Querschnitt auf mit einer Vertiefung, die den Rand des Brillenglases aufnimmt. Derartige Brillenrahmen weisen jedoch die nachfolgenden Nachteile auf:
1.Da diese bekannten Brillenrahmen starr sind und wenig flexibel, ist es schwierig die Brillengläser in die Nut oder Vertiefung des Rahmens einzufassen. Es besteht die Gefahr, daß der Rahmen dabei verzogen wird.
2.Da die Innenseite der Vertiefung eines solchen herkömmlichen Brillenrahmens eine flache Fläche darstellt, ist es schwierig eine gute Paßverbindung zwischen Rahmen und Brillenglas herzustellen. Dadurch entsteht die Gefahr, daß das Brillenglas aus dem Rahmen herausfällt.

Bei einem anderen Typ bekannter Brillenrahmen ist nur das Oberteil des Rahmens als starrer Rahmen ausgebildet und als Unterteil des Rahmens dient ein dünnes Band oder ein Draht, der das Brillenglas hält. Dieses Band oder Draht wird dann dadurch mit dem Oberteil des Rahmens verbunden, daß man die beiden Enden des Bandes oder des Drahts durch Bohrungen im Oberteil des Rahmens hindurchführt und dort befestigt. Auch dieser Aufbau des Rahmens hat jedoch Nachteile, nämlich:
1.Das dünne Band oder der Draht muß durch die Bohrungen im Endbereich des Oberteils des Rahmens hindurchgeführt und dort befestigt werden, bevor das Brillenglas eingesetzt werden kann. Dieser Arbeitsschritt ist manuell auszuführen, relativ schwierig und zeitraubend und erhöht folglich die Herstellungskosten des Rahmens.
2.Nachdem die Brille längere Zeit getragen wurde kann sich das Band oder der Draht lösen oder durch Abnutzung reißen oder brechen, so daß das Brillenglas herausfallen kann.
3.Die beiden Enden des Oberteils haben bei diesem Brillentyp scharfe Kanten, was die Gefahr von Verletzungen bei dem Träger dieser Brille hervorruft.

In der FR-A 1.266.547 wird ein ringförmig gebogener Metalldraht mit einem oberen dickeren und einem unteren dünneren Teil beschrieben. Der ringförmig gebogene Draht dient zur Aufnahme von Brillengläsern. Hier wird jedoch keine Anregung zur Gestaltung des Drahtquerschnitts gegeben, damit die Montage erleichtert und die Brillengläser sicher eingefaßt werden können.

Da folglich die Montage von Brillengläsern in den Rahmen bei den herkömmlichen Brillenrahmentypen schwierig und zeitaufwendig ist und die Verbindung zwischen Rahmen und Brillengläsern schwach ist, liegt der vorliegenden Erfindung die Aufgabe zugrunde, einen Brillenrahmen zu schaffen, der sowohl eine gute Verbindung zwischen Rahmen und Brillengläsern gewährleistet als auch eine kostengünstige möglichst automatische Montage der Brillengläser in den Rahmen.

Die Lösung dieser Aufgabe liefert ein erfindungsgemäßer Brillenrahmen mit den kennzeichnenden Merkmalen des Hauptanspruchs. Der vorliegende Erfindung ist das Ergebnis einer langwierigen Entwicklung und Erprobung. Der erfindungsgemäße Brillenrahmen löst die vorstehend genannten Probleme und ist dabei durch einen besonders einfachen Aufbau gekennzeichnet. Die Vorteile des erfindungsgemäßen Brillenrahmens lassen sich wie folgt zusammenfassen:
1. Der Metall- oder Kunststoffstreifen für die Rahmenherstellung gemäß der Erfindung kann maschinell hergestellt und verbunden werden, wodurch eine automatische und somit sehr rationelle Fertigung dieser Brillenrahmen möglich ist.
2. Aufgrund dieser automatischen Fertigung des erfindungsgemäßen Brillenrahmens weisen die Brillenrahmen auch eine geringere fertigungsbedingte Fehlerquote auf, wodurch die Herstellungskosten gesenkt werden.
3. Der erfindungsgemäße Brillenrahmen gewährleistet eine sichere feste und dauerhafte Verbindung zwischen Brillenrahmen und Brillengläsern und verhindert das Herausfallen derselben.
4. Da mindestens das Unterteil des Rahmens flexibel ist, kann der Rahmenstreifen bei der Einfassung der Brillengläser einfach gebogen werden, wodurch die Herstellungszeit verkürzt wird.
5. Streifen aus Metall oder Kunststoff für die Herstellung der erfindungsgemäßen Brillenrahmen können bei gleichbleibendem Aufbau und Querschnitt zu verschiedenen Umrißformen gebogen werden und ermöglichen so die Herstellung unterschiedlich geformten Brillen.

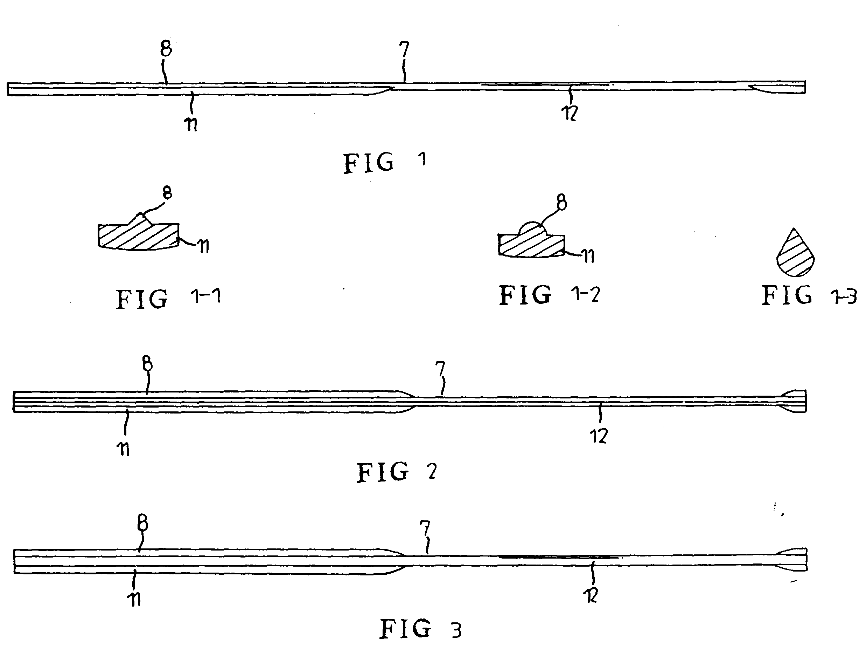

Im folgenden wird die vorliegende Erfindung anhand eines Ausführungsbeispiels unter Bezugnahme auf die beiliegenden Zeichnungen näher beschrieben. Dabei zeigen
- Fig. 1: einen Streifen gemäß der vorliegenden Erfindung für die Herstellung des Brillenrahmens,
- Fig. 1-1: einen Querschnitt durch den linken Teil des Streifens für die Herstellung des Rahmens gemäß Figur 1,
- Fig. 1-2: einen Querschnitt durch den linken Teil des Streifens gemäß einer anderen Ausführungsvariante der Erfindung,
- Fig. 1-3: einen vergrößerten Querschnitt durch den rechten Teil des Streifens für die Herstellung des Brillenrahmens gemäß der Erfindung,
- Fig. 2: eine Draufsicht auf einen Streifen für die Herstellung des Brillenrahmens gemäß einem Ausführungsbeispiel der vorliegenden Erfindung,
- Fig. 3: eine Draufsicht auf einen Streifen für die Herstellung des Brillenrahmens gemäß einem weiteren Ausführungsbeispiel der vorliegenden Erfindung,
- Fig. 4: eine perspektivische Ansicht eines Streifens für die Herstellung des Brillenrahmens gemäß der Erfindung,
- Fig. 5: eine perspektivische Ansicht eines solchen Streifens gemäß einer weiteren Ausführungsvariante der vorliegenden Erfindung,
- Fig. 6: eine dreidimensionale Ansicht eines Brillenrahmens, der aus einem Streifen gemäß der Erfindung hergestellt wurde,
- Fig. 7: eine Vorderansicht eines Brillenrahmens der aus einem erfindungsgemäßen Streifen hergestellt wurde,
- Fig. 8: eine Ansicht, die die Verbindung zwischen dem Rahmenstreifen gemäß der Erfindung und den Gläsern zeigt,
- Fig. 8-1: eine Schnittansicht, die die Verbindung des Rahmens und der Brillengläser gemäß der Darstellung nach Figur 8 zeigt,
- Fig. 9: eine Ansicht einer Brille, die die Verbindung zwischen dem Rahmen und den Brillengläsern gemäß der Erfindung in einer weiteren Ausführungsvariante zeigt,
- Fig. 10: eine Ansicht einer Brille, die die Verbindung zwischen dem erfindungsgemäßen Rahmen und den Brillengläsern gemäß einer weiteren Ausführungsvariante der Erfindung zeigt,
- Fig. 11: eine perspektivische Darstellung, die die Verbindung des Brillenrahmens mit einem Tragbügel zeigt.

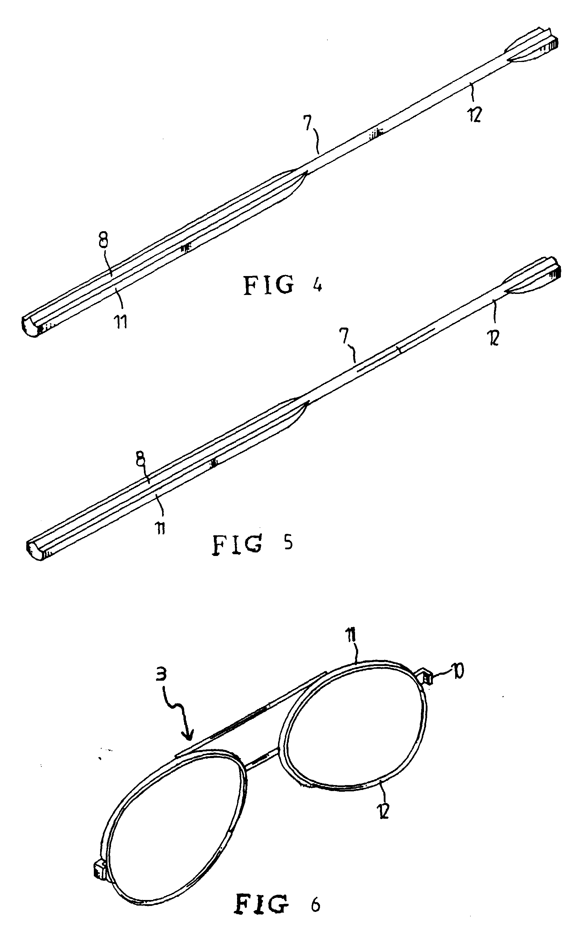

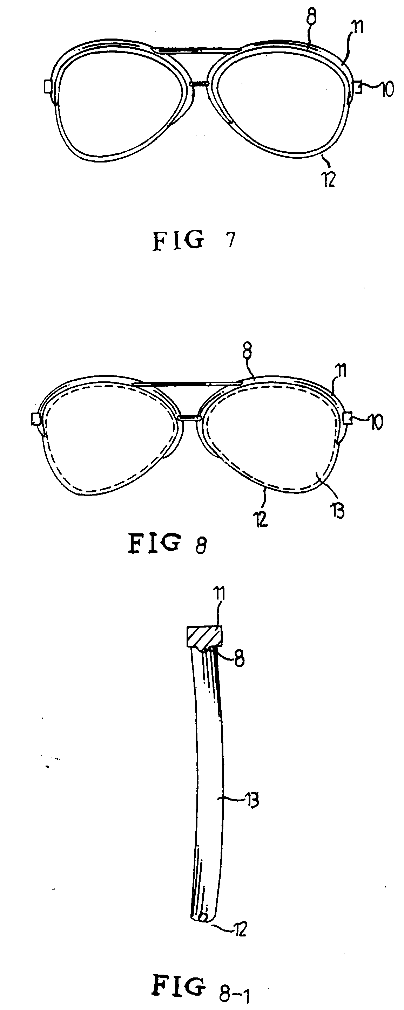

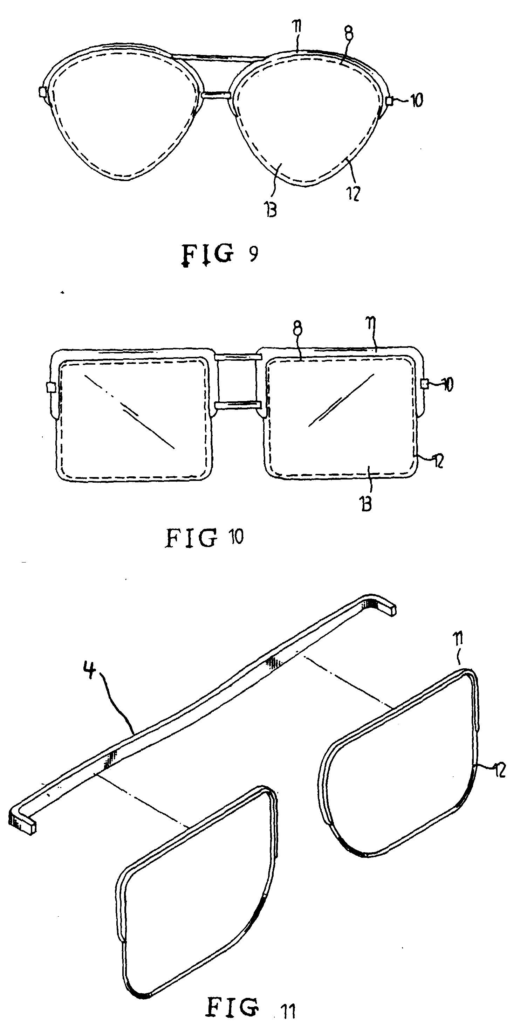

Wie man in Figur 1 erkennt besteht der Streifen 7 für die Herstellung des Brillenrahmens aus einem einstückigen durch Ziehen hergestellten Metallstreifen. Es können auch andere Materialien wie zum Beispiel Kunststoff verwendet werden. Der Querschnitt des linken Teils dieses Streifens 7 für die Rahmenherstellung ist im wesentlichen rechteckig, wobei in der Mitte oben eine im Querschnitt dreieckige spitzwinklige Leiste 8 angeformt ist (siehe Figur 1-1) oder eine ähnliche Leiste mit einem halbkreisförmigen Querschnitt (siehe Figur 1-2). Die rechte Seite 12 des Streifens 7 für die Herstellung des Rahmens ist schmaler als die linke Seite 11 und weist ebenfalls eine angeformte im Querschnitt dreieckig spitzwinklige Anformung auf, die mit der im Querschnitt dreieckigen Leiste 8 des linken Teils des Streifenelements verbunden ist. Außerdem ist der untere Teil dieser rechten Seite 12 des Streifens 7 für die Rahmenherstellung rund, so daß sich ein in etwa tropfenförmiger Querschnitt ergibt, der bei der Variante gemäß Figur 1-1 / 1-3, nach oben hin spitz zuläuft, wie dies aus Figur 1-3 erkennbar ist. Das Ende der rechten Seite des Streifens 7 für die Rahmenherstellung weist einen kurzen Abschnitt auf, der dieselbe Querschnittsform hat wie die linke Seite des Streifens 7. Aus den Figuren 2, 3, 4 und 5 kann man dies gut erkennen. Die beiden Enden des Streifens 7 für die Rahmenherstellung können miteinander verbunden werden und bilden so einen Rahmen 3 für die Brillengläser, wie dies in Figur 6 dargestellt ist. Der Streifen für die Herstellung des Brillenrahmens ist so geformt, daß das Erscheinungsbild der Brille nicht beeinträchtigt wird. Insbesondere werden die beiden Enden des Streifens an einer Stelle verbunden, an der der Tragbügel 4 montiert wird (siehe Figur 11) wobei der linke Abschnitt des Streifens 7 zum Oberteil 11 des Brillenrahmens wird und der rechte Abschnitt des Streifens 7 zum Unterteil 12 des Brillenrahmens wird (siehe Figur 6 und Figur 11). Da der Endbereich des rechten Abschnitts des Streifens 7 für die Rahmenherstellung ebenfalls einen Querschnitt hat, der demjenigen des linken Abschnitts 11 entspricht, läßt sich eine fließende übergangslose Verbindung zwischen dem Oberteil 11 und dem Unterteil 12 des Rahmens herstellen, bei der keinen scharfen Kanten entstehen. Bevor das Brillenglas 13 in den Rahmen eingesetzt wird, wird der Rand des Brillenglases 13 geschliffen, wodurch eine Nut hergestellt wird, so daß die Leiste 8 des Oberteils 11 des Rahmens und das Unterteil 12 des Rahmens in den Rand des Brillenglases 13 eingesetzt werden können (siehe Figur 8-1). Dabei kann das Unterteil 12 des Rahmens vollständig in die Nut des Brillenglases 13 eingesetzt werden, wie man dies aus den Figuren 8 und 8-1 erkennt. Der Streifen 7 für die Herstellung des Brillenrahmens kann unterschiedlich gebogen werden, so daß verschiedene Umrißformen für die Brille geschaffen werden, wie dies beispielhaft in den Figuren 9 und 10 und auch in Figur 7 dargestellt ist. An dem erfindungsgemäß hergestellten Brillenrahmen können unterschiedliche Tragbügel 4, 10 befestigt werden, wie dies in den Figuren 6, 10 und 11 gezeigt ist.

## Patentansprüche

1. Rahmen für Brillengläser zur Verwendung in einer Brillenfassung, bestehend aus einem einstückigen, zu einer geschlossenen Form gebogenen Streifen aus Metall oder Kunststoff, der einen ersten breiteren und einen zweiten schmaleren Teilbereich aufweist, dadurch gekennzeichnet, daß der erste Teilbereich (11) einen annähernd rechteckigen Querschnitt und eine an der Innenseite des Streifens (7) mittig angeformte im Querschnitt dreieckige oder halbkreisförmige Leiste (8) aufweist, daß der zweite Teilbereich (12) einen außenseitig abgerundeten Querschnitt aufweist, der innenseitig der Form der Leiste des linken Teilbereichs (11) entspricht, daß der Streifen (7) einen sich an den zweiten Teilbereich (12) anschließenden, im Vergleich zu diesem kurzen dritten Abschnitt aufweist, dessen Querschnittsform der Querschnittsform des ersten Teilbereichs (11) entspricht und daß der erste Teilbereich (11) mit dem dritten derart verbunden ist, daß der erste Teilbereich (11) das Oberteil des Rahmens bildet und der zweite Teilbereich (12) das Unterteil.

2. Rahmen für Brillengläser zur Verwendung in einer Brillenfassung, nach Anspruch 1, dadurch gekennzeichnet, daß der zweite Teilbereich (12) einen annähernd tropfenförmigen Querschnitt aufweist, der oberseitig spitzwinklig zuläuft oder abgerundet ist.

3. Rahmen für Brillengläser zur Verwendung in einer Brillenfassung nach Anspruch 1 oder 2, dadurch gekennzeichnet, daß dieser derart ausgeführt ist, daß er nach dem Biegen bei Einfassung der Brillengläser (13) im Bereich der innenseitig dem Brillenglas zugewandt liegenden Leiste (8) von einer Nut im Rand des Brillenglases (13) aufgenommen werden kann und auch der das Unterteil des Brillenrahmens bildende zweite Teilbereich (12) von einer Nut im Rand des Brillenglases (13) aufgenommen werden kann.

## Claims

1. Spectacle rim for use in a spectacle frame consisting of a one-piece strip of metal or plastics material bent to a closed shape and comprising a first wide and a second smaller portion, characterised in that the first portion (11) has an approximately rectangular cross section and comprises a ledge (8) with triangular or semicircular cross section integrally formed at the mid region of the inner side of the strip (7), that the second portion (12) comprises a cross section rounded at the outer side which on the inner side corresponds to the shape of the ledge of the left portion (11), that the strip (7) comprises a third portion joined up with the second portion (12) and being short relative to the latter, the cross-sectional shape of which corresponds to the cross-sectional shape of the first portion (11), and that the first portion (11) is connected to the third portion in such a manner that the first portion (11) forms the upper part of the frame and the second portion (12) forms the lower part.

2. Spectacle rim for use in a spectacle frame as claimed in claim 1, characterised in that the second portion (12) comprises an approximately drop-shaped cross section which tapers towards the upper side or is rounded.

3. Spectacle rim for use in a spectacle frame as claimed in claim 1 or 2, characterised in that this rim is constructed in such a manner that it, after bending, can be incorporated in a groove in the margin of the spectacle lens (13) in the region of the ledge (8) facing the spectacle lens at the inner side when framing the spectacle lenses, and also the second portion (12) forming the lower part of the spectacle rim can be incorporated in a groove in the margin of the spectacle lens (13).

## Revendications

1. Cerclage pour verres de lunettes à utiliser dans une monture de lunettes, constitué par une bande en une pièce en métal ou en matière plastique cintrée en un contour fermé, bande qui présente un premier tronçon partiel plus large et un deuxième tronçon partiel plus étroit, caractérisé en ce que le premier tronçon partiel (11) présente une section transversale sensiblement rectangulaire et une nervure (8) à section transversale triangulaire ou semi-sphérique formée centralement sur la face intérieure de la bande (7), en ce que le deuxième tronçon partiel (12) présente une section transversale arrondie extérieurement, correspondant intérieurement à la forme de la nervure du tronçon partiel (11) de gauche, en ce que la bande (7) présente un troisième tronçon partiel se raccordant au deuxième tronçon partiel (12) et de faible longueur par rapport à ce dernier, troisième tronçon partiel dont la section transversale correspond à la forme de la section transversale du premier tronçon partiel (11), et en ce que le premier tronçon partiel (11) est relié au troisième tronçon partiel de manière telle que le premier tronçon partiel (11) constitue la partie supérieure de la monture et que le deuxième tronçon partiel (12) en constitue la partie inférieure.

2. Cerclage pour verres de lunettes à utiliser dans une monture de lunettes, suivant la revendication 1, caractérisé en ce que le deuxième tronçon partiel (12) présente une section transversale sensiblement en forme de gouttelette, qui en haut se termine à angle aigu ou est arrondie.

3. Cerclage pour verres de lunettes à utiliser dans une monture de lunettes suivant la revendication 1 ou 2, caractérisé en ce qu'après son cintrage en un contour fermé pour le sertissage des verres de lunettes (13), ce cerclage peut, dans la région de la nervure (8) orientée intérieurement vers le verre de lunettes, être reçu dans une rainure dans le bord du verre de lunettes (13), et en ce que le deuxième tronçon partiel (12) constituant la partie inférieure de la monture peut également être reçu dans une rainure dans la bord du verre de lunettes (13).
